# EUROPEAN PATENT APPLICATION

(11) **EP 4 249 951 A1**
(43) Date of publication of application: **27.09.2023**
(21) Application number: 23163096.3
(22) Date of filing: 21.03.2023
(51) Int. Cl.: G01S 7/487, G01S 17/42

(54) **LIDAR ECHO SIGNAL PROCESSING METHOD AND DEVICE**

(30) Priority: 24.03.2022 CN 202210295980
(71) Applicant: Suteng Innovation Technology Co., Ltd, Shenzhen City Guangdong 518000 (CN)
(72) Inventor: GONG, Changsheng, Shenzhen City (CN); WANG, Jiaxin, Shenzhen City (CN)
(74) Representative: Ran, Handong

(57) **Abstract**

The present application discloses a LiDAR echo signal processing method and device. The method includes: obtaining an echo signal, where the echo signal includes multidimensional signal emission angles; determining distance information of a detected object based on the echo signal; and when the distance of the detected object is less than or equal to a preset distance value, superimposing a preset number of echo signals at each emission angle, and outputting a superimposed target signal; or when the distance of the detected object is greater than the preset distance value, performing non-coherent integration on multi-angle echo signals based on the preset neighborhood window, to obtain the integrated target signal; and performing non-coherent integration on the target signal and outputting the integrated target signal. Different echo signal processing methods are used for echo signals at different distances, to improve the signal-to-noise ratio of signals at different distances, thereby improving the ranging capability of the LiDAR.

## Description

### TECHNICAL FIELD

This application relates to the technical field of smart driving, and in particular, to a LiDAR echo signal processing method and device.

### BACKGROUND

LiDAR emits a detection signal to a to-be-detected object, and the detection signal is reflected when passing by the to-be-detected object. The echo signal reflected by the to-be-detected object is received, and then the echo signal is processed. As an important quality indicator in a signal processing procedure, a signal-to-noise ratio determines a ranging capability of the LiDAR. Therefore, how to effectively improve the signal-to-noise ratio of the LiDAR echo signal has become an urgent problem to be solved.

### SUMMARY

Embodiments disclosed in this application provide a LiDAR echo signal processing method and device, to effectively improve a signal-to-noise ratio of a LiDAR echo signal, thereby improving a ranging capability of the LiDAR echo signal.

According to a first aspect, this application discloses a LiDAR echo signal processing method, including:
obtaining an echo signal, where the echo signal includes multidimensional signal emission angles;
determining a distance of a detected object based on the echo signal; and
when the distance of the detected object is less than or equal to a preset distance value, superimposing a preset number of echo signals at each emission angle, and outputting a superimposed target signal, or
when the distance of the detected object is greater than the preset distance value, performing non-coherent integration on multi-angle echo signals based on a preset neighborhood window, to obtain an integrated target signal.

According to a second aspect, a LiDAR echo signal processing device is disclosed and includes:
an obtaining module, configured to obtain an echo signal, where the echo signal includes multidimensional signal emission angles;
a determining module, configured to determine a distance of a detected object based on distance information of the echo signal;
a superimposition module, configured to: when the distance of the detected object is less than or equal to a preset distance value, superimpose a preset number of echo signals at each emission angle, and output a superimposed target signal; and
an integration module, configured to: when the distance of the detected object is greater than the preset distance value, perform non-coherent integration on multi-angle echo signals based on a preset neighborhood window, to obtain an integrated target signal.

According to a third aspect, an obstacle detection device is disclosed and includes: a processor, a memory and a communication interface. The processor is connected with the memory and the communication interface. The memory is configured to store executable program code. The processor runs the program corresponding to the executable program code by reading the executable program code stored in the memory for executing the laser radar echo signal processing method provided by any one of the first aspects.

According to a fourth aspect, a computer-readable storage medium is provided. The computer-readable storage medium stores an instruction. When the instruction is executed by a processor, the method in any embodiment of the first aspect is implemented.

The present application discloses a LiDAR echo signal processing method. The method includes: obtaining an echo signal, where the echo signal includes multidimensional signal emission angles; determining distance information of a detected object based on the echo signal; and when the distance of the detected object is less than or equal to a preset distance value, superimposing a preset number of echo signals at each emission angle, and outputting a superimposed target signal; or when the distance of the detected object is greater than the preset distance value, performing non-coherent integration on multi-angle echo signals based on the preset neighborhood window, to obtain the integrated target signal; and performing non-coherent integration on the target signal and outputting the integrated target signal. Different echo signal processing methods are used for echo signals at different distances, to improve the signal-to-noise ratio of signals at different distances, thereby improving the ranging capability of the LiDAR.

### BRIEF DESCRIPTION OF THE DRAWINGS

To describe the technical solutions in the embodiments of this application more clearly, the following briefly describes the accompanying drawings required in the embodiments. Obviously, the accompanying drawings in the following descriptions show merely some embodiments of this application, and a person of ordinary skill in the art may derive other drawings from these accompanying drawings without creative efforts.
FIG. 1 is a diagram of an application scenario of a LiDAR echo signal processing method according to one or more embodiments;
FIG. 2 is a schematic flowchart of a LiDAR echo signal processing method according to one or more embodiments;
FIG. 2a is a schematic diagram of overlaying echo signals at all angles according to one or more embodiments;
FIGs. 2b to 2d are schematic diagrams of setting a preset neighborhood window according to one or more embodiments;
FIG. 2e is a schematic diagram of adjusting a preset neighborhood window according to one or more embodiments;
FIG. 3 is a schematic flowchart of a LiDAR echo signal processing method according to one or more embodiments;
FIG. 3a is a schematic diagram of a center detection field of view and an edge detection field of view in a detection field of view of a LiDAR according to one or more embodiments;
FIG. 4 is a block diagram of a LiDAR echo signal processing device according to one or more embodiments;
FIG. 5 is a block diagram of another LiDAR echo signal processing device according to one or more embodiments; and
FIG. 6 is a block diagram of a computer device according to one or more embodiments.

### DESCRIPTION OF THE INVENTION

In order that the above objects, features, and advantages of the present application may be more readily understood, a detailed description of the preferred embodiments of the present application will be made with reference to the accompanying drawings.

The terms "first," "second," "third," and the like in the description and claims of the present application as well as in the foregoing drawings are used for distinguishing among various objects and not for describing a particular order. Additionally, that term "including" and "have," as well as any variants thereof, are intended to cover non-exclusive inclusion. For example, a process, method, system, article, or apparatus that comprises a series of steps or elements is not limited to only those steps or elements listed, but may alternatively include other steps or elements not listed or that are inherent to such a process, method, article, or apparatus.

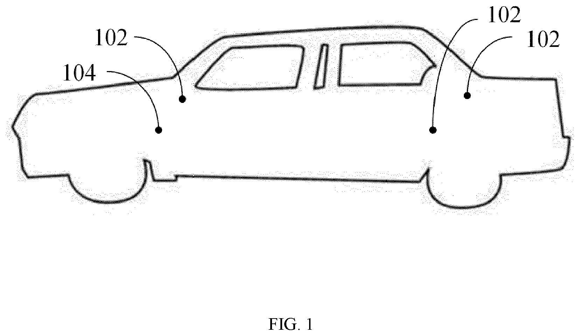

A LiDAR echo signal processing method provided in this application may be applied to an application environment shown in FIG. 1. The LiDAR 102 emits a detection signal, and after the detection signal reaches a to-be-detected object, an echo signal is reflected. The LiDAR may be a solid-state LiDAR. The LiDAR 102 receives the echo signal reflected by the to-be-detected object through the receiver, and the receiver may be a silicon photomultiplier (SiPM). The LiDAR 102 sends the echo signal to a computer device 104, and the echo signal includes multidimensional signal emission angles. The computer device 104 buffers the echo signal based on the multidimensional signal emission angles to obtain buffered signals. When the number of buffered signals reaches a preset buffering number, the computer device 104 extracts a target signal corresponding to a preset neighborhood window from the buffered signals. The computer device 104 selects an echo signal processing policy based on echo signal information, to obtain a target signal.

Herein, it should be understood that all or a part of the computer device 104 may be integrated inside the LiDAR 102, or may exist independently of the LiDAR 102.

The LiDAR 102 may include a Micro-Electro-Mechanical Systems (MEMS) solid-state LiDAR or a flash LiDAR. The embodiments of this application impose no limitation on a specific type of the LiDAR or a mounting position and number of the LiDAR.

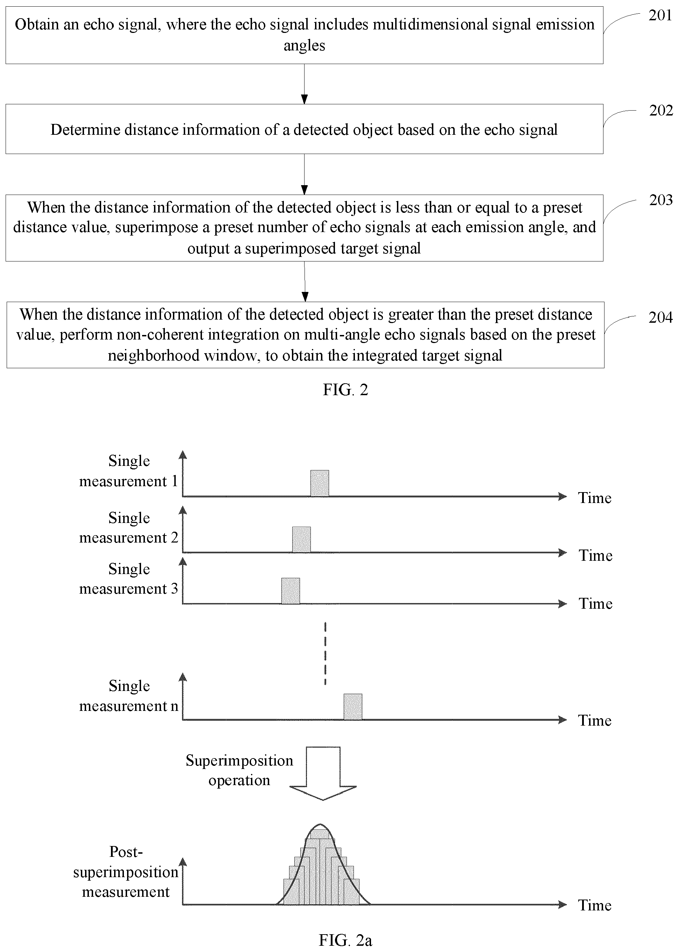

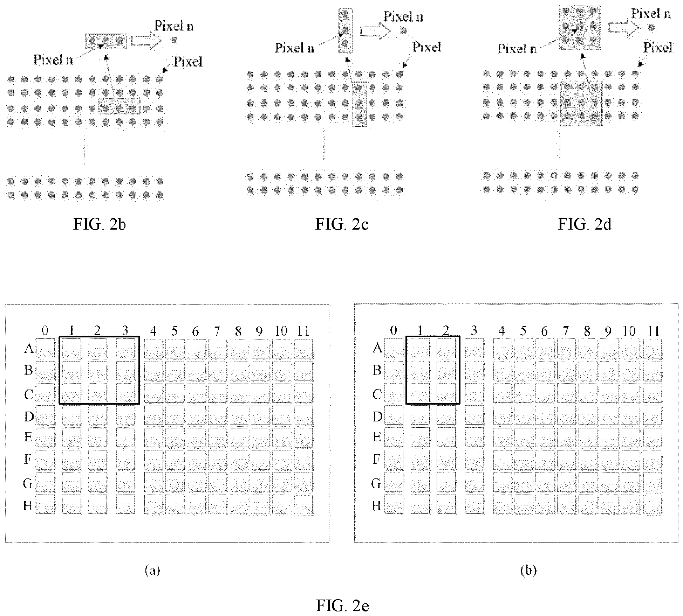

In an embodiment, referring to FIG. 2, FIG. 2 is a schematic flowchart of a LiDAR echo signal processing method according to an embodiment of this application. The method includes the following steps.

S201. Obtain an echo signal, where the echo signal includes multidimensional signal emission angles.

Herein, the echo signal may be obtained based on a scanning mode of the LiDAR.

Specifically, different types of LiDAR use different methods for scanning point cloud data. A MEMS LiDAR performs scanning through a simple harmonic motion of a mirror, and therefore, an optical scanning path can implement, for example, a scanning field of view with a slow axis reciprocating from top to bottom and a fast axis reciprocating from left to right in a spatial sequence. For another example, a flash LiDAR performs scanning in a fast-scanning manner through a transmitter based on preset control logic. For another example, a mechanical LiDAR performs scanning by driving an optical system to rotate 360 degrees through a mechanical drive device, to form a cylindrical detection region with the LiDAR as the center.

The LiDAR emits a detection laser. After the detection laser reaches the to-be-detected object, the echo signal is reflected, and the LiDAR receives the echo signal through the receiver. The computer device receives the echo signal sent by the LiDAR. The echo signals may include a preamble signal, a valid echo signal, a false echo signal, and ambient noise. The echo signal includes multidimensional signal emission angles. The multidimensional signal emission angles may include a pitch angle and a yaw angle. A same pitch angle may correspond to a plurality of yaw angles, and a same yaw angle may correspond to a plurality of pitch angles. Different signal emission angles can correspond to emission and receiving of independent signals, that is, different detection signals and echo signals. The number of signal emission angles may be determined based on monoscopic resolution of the LiDAR. For example, the monoscopic resolution of a solid-state LiDAR is 76x250, and the solid-state LiDAR can include 76 pitch angles and 250 yaw angles. The echo signals at the multidimensional signal emission angles may be obtained by the LiDAR by adjusting a deflection angle of the scanning device. It can be understood that the multidimensional signal emission angles may also be implemented by adjusting different transmitters to perform fast scanning and emit a detection laser.

Herein, it can be understood that after receiving the echo signal, the computer device can buffer the echo signal based on the multidimensional signal emission angles. Specifically, the echo signal received by the computer device may also include a signal receiving sequence. The computer device is preconfigured with a plurality of memories. The computer device determines a preset memory corresponding to the echo signal based on the multidimensional signal emission angles and the signal receiving sequence. Further, the computer device buffers the echo signal into a determined preset memory.

Herein, it can be understood that the echo signal received by the computer device may include a signal receiving sequence. The signal receiving sequence may be an emission sequence number corresponding to the echo signal, or may be an emission moment corresponding to the echo signal. The computer device may be preconfigured with a plurality of memories. The plurality of memories can store a same number of echo signals. Each memory has corresponding storage capacity. The number of echo signals stored in each memory may be less than or equal to the storage capacity. The multidimensional signal emission angles may include a pitch angle and a yaw angle. A same pitch angle may correspond to a plurality of yaw angles, and a same yaw angle may correspond to a plurality of pitch angles. The computer device may store a plurality of echo signals with the same pitch angle and different yaw angles into a corresponding memory. The computer device adjusts the pitch angle of the LiDAR, maintains the adjusted pitch angle, and then adjusts a yaw angle of the LiDAR in a direction opposite to that of the last emitted detection signal, to obtain an echo signal corresponding to the adjusted pitch angle. The computer device stores the echo signal corresponding to the adjusted pitch angle in another memory.

After the computer device buffers the echo signal, the buffered signal is obtained. The computer device determines whether the number of buffered signals reaches a preset buffering number. The preset buffering number is related to resolution of a detection field of view of the LiDAR.

In an embodiment, before buffering the echo signal based on the multidimensional signal emission angles, the method further includes: amplifying the received echo signal to obtain an amplified echo signal; performing analog-to-digital conversion on the amplified echo signal to obtain a converted digital signal; and filtering the converted digital signal.

The computer device amplifies the echo signal, thereby amplifying the weak echo signal for subsequent signal processing. The computer device performs analog-to-digital conversion on the amplified echo signal to process the echo signal. The computer device filters a converted digital signal. The filtering may be removing a direct current component from the echo signal, and a method for removing the direct current component may be using a high-pass filter for filtering. The computer device filters the converted digital signal, thereby avoiding interference from the direct current component.

S202. Determine distance of a detected object based on the echo signal.

Herein, it can be understood that when the distance information of the detected object is determined based on the echo signal, the distance information of the detected object can be determined by reading the distance information corresponding to the echo signal based on the obtained echo signal.

Herein, it can be understood that the distance information of the detected object can also be determined based on a time region to which time of receiving the echo signal belongs. For example, an echo signal received within a first preset time range after the detection laser is emitted can be output to indicate that the object is in a short distance; and an echo signal received within a second preset time range after the detection laser is emitted can be output to indicate that the detected object is in a long distance. Herein, it can be understood that duration of the second preset time range is greater than duration of the first preset time range.

S203. When the distance of the detected object is less than or equal to a preset distance value, superimpose a preset number of echo signals at each emission angle, and output a superimposed target signal.

Herein, it can be understood that, before superimposing a preset number of echo signals at each emission angle, the method further includes: retrieving the preset number of echo signals from a preset memory based on the emission angle. Herein, the preset number depends on a detection precision requirement for a LiDAR. It can be understood that the higher the precision is, the greater the preset number is.

Herein, specifically, as shown in FIG. 2a, the echo signals at each angle are superimposed to output the superimposed target signal.

S204. When the distance of the detected object is greater than the preset distance value, perform non-coherent integration on multi-angle echo signals based on the preset neighborhood window, to obtain an integrated target signal.

Herein, it can be understood that before performing non-coherent integration on multi-angle echo signals based on the preset neighborhood window, the method further includes: obtaining a receiving sequence of multi-angle echo signals; and setting the preset neighborhood window based on the receiving sequence of multi-angle echo signals.

Herein, it may be understood that in a case where output delay of the detection point cloud is minimum, for a design of performing scanning chronologically in the horizontal direction, preferably, a preset neighborhood window is set in the horizontal direction for integration; for a design of performing scanning chronologically in the vertical direction, preferably, the preset neighborhood window is set in the vertical direction for integration; and for a design of performing scanning chronologically through integration of a matrix block, that is, a design of performing emission with the matrix block as the minimum unit, preferably, the preset neighborhood window is set based on the matrix block for integration. In a case where the output delay of the measured point cloud is ruled out, the optimal ranging performance may be implemented for the matrix block integration. Specifically, FIG. 2b, FIG. 2c, and FIG. 2d show design diagrams of three different arrangements of preset neighborhood windows.

Herein, it can be understood that obtaining an original waveform of an echo signal at any angle in multi-angle echo signals can be obtaining a result in one measurement. In a preferred embodiment, as shown in FIG. 2a, to obtain better ranging performance, the echo signal at any angle can also be a superimposed echo signal obtained by integrating multiple measurement results.

Herein, in an optional embodiment, before performing non-coherent integration on the multi-angle echo signals based on the preset neighborhood window, the method further includes: obtaining a similarity value of echo data of close angles within the preset neighborhood window; and when the similarity value is greater than a preset threshold, performing non-coherent integration based on the preset neighborhood window, to obtain an integrated target signal; or when the similarity value is less than or equal to the preset threshold, adjusting the preset neighborhood window based on the similarity value.

Herein, it can be understood that when a similarity value is calculated, a difference between echo areas of close data may be used as a determining basis; a difference between echo start moments of close data may further be used as the determining basis; or both the difference between the echo areas and the difference between the echo start moments may be used as the determining basis. Based on different distance scenarios, a threshold Th_Area is set for the difference between different echo areas, and a threshold Th_start is set for the difference between different echo start moments. Herein, it can be understood that the farther the distance is, the greater the threshold Th_Area is set for the difference between the echo areas, and the farther the distance is, the greater the threshold Th_start is set for the difference between different echo start moments. When both the difference between the echo areas and the difference between the echo start moments are used as the determining basis, if the difference between the echo areas of the close data is less than or equal to Th_Area and the difference between the echo start moments of the close data is less than or equal to Th_start, this indicates that the close data is similar; otherwise, this indicates that the close data is not similar.

Herein, in an optional embodiment, when the similarity value is less than or equal to the preset threshold, adjusting the preset neighborhood window based on the similarity value includes: when it is determined that a total similarity value of the corresponding echo signals in the preset neighborhood window is less than the preset threshold, calculating a similarity value between any two close echo signals in the preset neighborhood window separately, to determine echo signals with a similarity value different from that of other echo signals within the preset neighborhood window; and based on angle information of the determined echo signals with the similarity value different from that of other echo signals in the preset neighborhood window, adjusting the preset neighborhood window, so that the similarity value of the echo signals included in the preset neighborhood window is greater than the preset threshold.

For example, FIG. 2e shows a specific adjustment process of the preset neighborhood window. As shown in FIG. 2e(a), an initial preset neighborhood window includes echo signals such as A1, A2, A3, B1, B2, B3, C1, C2, and C3, similarity values of the echo signals such as A1, A2, A3, B1, B2, B3, C1, C2, and C3 in the initial preset neighborhood window are determined, and if the similarity values of A3, B3, and C3 do not meet a preset requirement, the preset neighborhood window is adjusted in a manner shown in FIG. 2e(b).

In this embodiment, the echo signal is obtained, where the echo signal includes multidimensional signal emission angles; the distance information of the detected object is determined based on the echo signal; and when the distance information of the detected object is less than or equal to a preset distance value, a preset number of echo signals at each emission angle is superimposed, and a superimposed target signal is output; or when the distance information of the detected object is greater than the preset distance value, non-coherent integration is performed on multi-angle echo signals based on the preset neighborhood window, to obtain the integrated target signal. Different echo signal processing methods are used for echo signals at different distances, to improve the signal-to-noise ratio of signals at different distances, thereby improving the ranging capability of the LiDAR. It can be understood that, for a signal at a short distance, superimposing the multiple emission echoes of signals at each angle can improve the signal-to-noise ratio of the echo signals at each angle and improve the detection capability. For an echo signal at a long distance, not only the echo signals at each angle are superimposed to improve the signal-to-noise ratio of the echo signals at each angle, but also non-coherent integration can be performed on the echo signals on this basis, and spatial correlation between echo signals at multidimensional signal emission angles is used, to increase the amount of signal integration when the phase of the target signal is lost, thereby improving the signal-to-noise ratio of the echo signals, and further effectively improving the ranging capability of the echo signals. In addition, in this embodiment of the application, a similarity value of the echo signals in the preset neighborhood window is determined, to ensure accuracy of non-coherently integrated signals, thereby further improving the ranging capability.

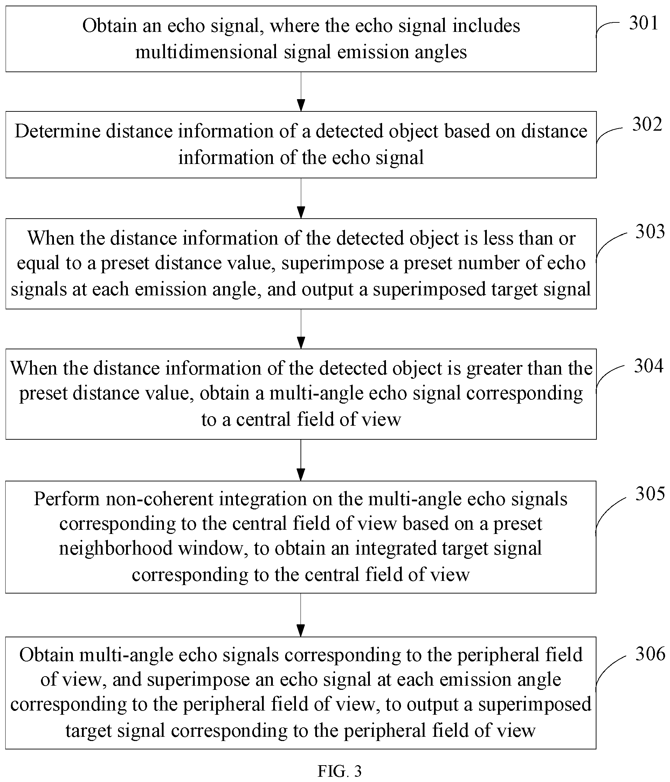

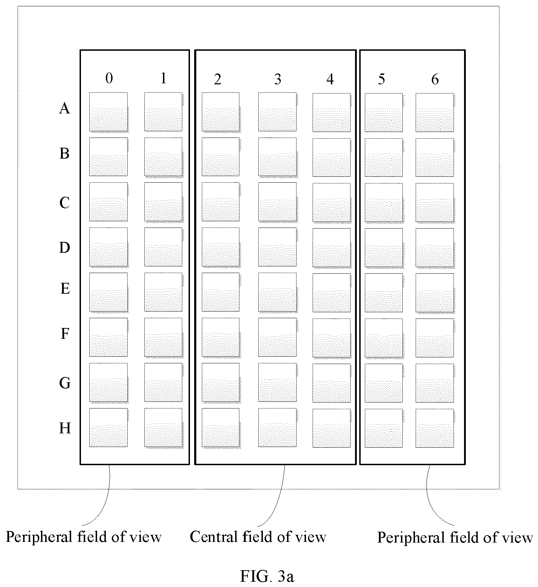

In another embodiment, referring to FIG. 3, FIG. 3 is a schematic flowchart of a LiDAR echo signal processing method according to an embodiment of this application. The method includes the following steps.

S301. Obtain an echo signal, where the echo signal includes multidimensional signal emission angles.

The LiDAR emits a detection signal. After the detection signal reaches the to-be-detected object, the echo signal is reflected, and the LiDAR receives the echo signal through the receiver. The computer device receives the echo signal sent by the LiDAR. The echo signals may include a preamble signal, a valid echo signal, a false echo signal, and ambient noise. The echo signal includes multidimensional signal emission angles. The multidimensional signal emission angles may include a pitch angle and a yaw angle. A same pitch angle may correspond to a plurality of yaw angles, and a same yaw angle may correspond to a plurality of pitch angles. Different signal emission angles can correspond to emission and receiving of independent signals, that is, different detection signals and echo signals. The number of signal emission angles may be determined based on monoscopic resolution of the LiDAR. For example, the monoscopic resolution of a solid-state LiDAR is 76x250, and the solid-state LiDAR can include 76 pitch angles and 250 yaw angles. The echo signals at the multidimensional signal emission angles may be obtained by the LiDAR by adjusting a deflection angle of the scanning device. It can be understood that the multidimensional signal emission angles may also be implemented by adjusting different transmitters to perform fast scanning and emit a detection laser.

Herein, it can be understood that after receiving the echo signal, the computer device can buffer the echo signal based on the multidimensional signal emission angles. Specifically, the echo signal received by the computer device may also include a signal receiving sequence. The computer device is preconfigured with a plurality of memories. The computer device determines a preset memory corresponding to the echo signal based on the multidimensional signal emission angles and a signal receiving sequence. Further, the computer device buffers the echo signal into a determined preset memory.

S302. Determine distance of a detected object based on distance information of the echo signal.

Herein, it can be understood that when the distance information of the detected object is determined based on the echo signal, the distance information of the detected object can be determined by reading the distance information corresponding to the echo signal based on the obtained echo signal.

Herein, it can be understood that the distance information of the detected object can also be determined based on a time region to which time of receiving the echo signal belongs. For example, the echo signal received within a first preset time range after the detection laser is emitted can be output to indicate that the object is at a short distance; and the echo signal received within a second preset time range after the detection laser is emitted can be output to indicate that the detected object is at a long distance. Herein, it can be understood that duration of the second preset time range is greater than duration of the first preset time range.

S303. When the distance of the detected object is less than or equal to a preset distance value, superimpose a preset number of echo signals at each emission angle, and output a superimposed target signal ;

Herein, it can be understood that, before superimposing a preset number of echo signals at each emission angle, the method further includes: retrieving the preset number of echo signals from a preset memory based on the emission angle.

Herein, specifically, as shown in FIG. 2a, the echo signals at each angle are superimposed to output the superimposed target signal.

S304. When the distance of the detected object is greater than the preset distance value, obtain a multi-angle echo signal corresponding to a central field of view.

Herein, it can be understood that definition of the central field of view and a peripheral field of view of the LiDAR is related to a design parameter of the LiDAR. In an example, it is believed that the central field of view accounts for 50% of the overall detection field of view, that is, in the case of a horizontal detection angle of view of 120 degrees, it is believed that the middle 60 degrees is the central field of view in the horizontal direction. It is a similar case with the vertical direction, that is, in the case of a vertical detection angle of view of 40 degrees, it is believed that the middle 20 degrees is the central field of view in the vertical direction. FIG. 3a is a schematic diagram of a central field of view and a peripheral field of view in a receiving field of view.

Herein, it can be understood that obtaining multi-angle echo signals corresponding to the central field of view specifically includes:
obtaining a horizontal field of view range and/or a vertical field of view range corresponding to the central field of view; and
retrieving the echo signals corresponding to the central field of view from a preset memory based on the horizontal field of view range and/or the vertical field of view range corresponding to the central field of view.

S305. Perform non-coherent integration on the multi-angle echo signals corresponding to the central field of view based on a preset neighborhood window, to obtain an integrated target signal corresponding to the central field of view.

Herein, in an optional embodiment, before performing non-coherent integration on the multi-angle echo signals corresponding to the central field of view based on a preset neighborhood window, the method further includes: obtaining a receiving sequence of multi-angle echo signals; and setting the preset neighborhood window based on the receiving sequence of multi-angle echo signals.

Herein, it can be understood that obtaining an original waveform of an echo signal at any angle in multi-angle echo signals can be obtaining a result in one measurement. In a preferred embodiment, as shown in FIG. 2a, to obtain better ranging performance, the echo signal at any angle can also be a superimposed echo signal obtained by integrating multiple measurement results.

Herein, in an optional embodiment, before performing non-coherent integration on the multi-angle echo signals corresponding to the central field of view based on a preset neighborhood window, the method further includes:
obtaining a similarity value of echo data of close angles within the preset neighborhood window; and
when the similarity value is greater than a preset threshold, performing non-coherent integration based on the preset neighborhood window, to obtain an integrated target signal, or
when the similarity value is less than or equal to the preset threshold, adjusting the preset neighborhood window based on the similarity value.

Herein, it can be understood that when a similarity value is calculated, a difference between echo areas of close data may be used as a determining basis; a difference between echo start moments of close data may further be used as the determining basis; or both the difference between the echo areas and the difference between the echo start moments may be used as the determining basis. Based on different distance scenarios, a threshold Th_Area is set for the difference between different echo areas, and a threshold Th_start is set for the difference between different echo start moments. Herein, it can be understood that the farther the distance is, the greater the threshold Th_Area is set for the difference between the echo areas, and the farther the distance is, the greater the threshold Th_start is set for the difference between different echo start moments. When both the difference between the echo areas and the difference between the echo start moments are used as the determining basis, if the difference between the echo areas of the close data is less than or equal to Th_Area and the difference between the echo start moments of the close data is less than or equal to Th_start, this indicates that the close data is similar; otherwise, this indicates that the close data is not similar.

Herein, in an optional embodiment, when the similarity value is less than or equal to the preset threshold, adjusting the preset neighborhood window based on the similarity value includes: when it is determined that a total similarity value of the corresponding echo signals in the preset neighborhood window is less than the preset threshold, calculating a similarity value of any two close echo signals in the preset neighborhood window separately, to determine echo signals with a similarity value different from that of other echo signals within the preset neighborhood window; and based on angle information of the determined echo signals with the similarity value different from that of other echo signals in the preset neighborhood window, adjusting the preset neighborhood window, so that the similarity value of the echo signals included in the preset neighborhood window is greater than the preset threshold.

S306. Obtain multi-angle echo signals corresponding to the peripheral field of view, and superimpose an echo signal at each emission angle corresponding to the peripheral field of view, to output a superimposed target signal corresponding to the peripheral field of view.

Herein, it can be understood that obtaining multi-angle echo signals corresponding to the peripheral field of view specifically includes:
obtaining a horizontal angle of view range and/or a vertical angle of view range corresponding to the peripheral field of view; and
retrieving the echo signals corresponding to the peripheral field of view from a preset memory based on the horizontal angle of view range and/or the vertical angle of view range corresponding to the peripheral field of view.

In this embodiment, the echo signal is obtained, where the echo signal includes multidimensional signal emission angles; the distance information of the detected object is determined based on the echo signal; when the distance information of the detected object is less than or equal to a preset distance value, a preset number of echo signals at each emission angle is superimposed, and a superimposed target signal is output; or when the distance information of the detected object is greater than the preset distance value, the multi-angle echo signal corresponding to the central field of view is obtained; non-coherent integration is performed on the multi-angle echo signals corresponding to the central field of view based on the preset neighborhood window, to obtain the integrated target signal corresponding to the central field of view; the multi-angle echo signals corresponding to the peripheral field of view are obtained, and an echo signal at each emission angle corresponding to the peripheral field of view is superimposed, to output a superimposed target signal corresponding to the peripheral field of view. Different echo signal processing methods are used for echo signals at different distances, to improve the signal-to-noise ratio of signals at different distances, thereby improving the ranging capability of the LiDAR. It can be understood that, for a signal at a short distance, superimposing the multiple emission echoes of signals at each angle can improve the signal-to-noise ratio of the echo signals at each angle and improve the detection capability. For an echo signal at a long distance, not only the echo signals at each angle are superimposed to improve the signal-to-noise ratio of the echo signals at each angle, but also non-coherent integration can be performed on the echo signals on this basis, and spatial correlation between echo signals at multidimensional signal emission angles is used, to increase the amount of signal integration when the phase of the target signal is lost, thereby improving the signal-to-noise ratio of the echo signals, and further effectively improving the ranging capability of the echo signals. Further, based on an actual application scenario of performing ranging in the main central field of view of the LiDAR and filling blind spots in the peripheral field of view, non-coherent integration is performed on the central field of view, and the echo signal at each angle is superimposed for the peripheral field of view, to improve the signal-to-noise ratio and the ranging capability, thereby further reducing an amount of calculation. In addition, in this embodiment of this application, similarity values of the echo signals in the preset neighborhood window are determined, to ensure accuracy of non-coherently integrated signals, thereby further improving the ranging capability.

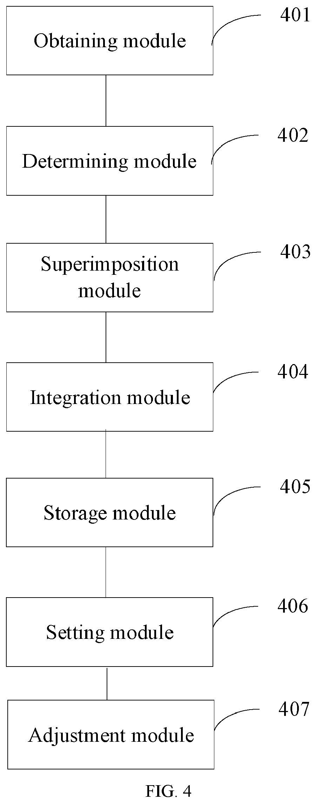

Referring to FIG. 4, FIG. 4 shows a LiDAR echo signal processing device 400 according to an embodiment of this application. The LiDAR echo signal processing device 400 includes an obtaining module 401, a determining module 402, a superimposition module 403, and an integration module 404, where
the obtaining module 401 is configured to obtain an echo signal, where the echo signal includes multidimensional signal emission angles;
the determining module 402 is configured to determine a distance of a detected object based on distance information of the echo signal;
the superimposition module 403 is configured to: when the distance of the detected object is less than or equal to a preset distance value, superimpose a preset number of echo signals at each emission angle, and output a superimposed target signal; and
the integration module 404 is configured to: when the distance of the detected object is greater than the preset distance value, perform non-coherent integration on multi-angle echo signals based on a preset neighborhood window, to obtain the integrated target signal.

In an embodiment, the device may further include a storage module 405, where the storage module 405 is configured to determine a preset memory corresponding to the echo signal based on the multidimensional signal emission angles and a signal receiving sequence of the echo signal; and buffer the echo signal into the corresponding preset memory.

In an embodiment, the foregoing device may further include a setting module 406, where
the obtaining module 401 is configured to obtain a receiving sequence of multi-angle echo signals; and
the setting module 406 is configured to set the preset neighborhood window based on the receiving sequence of the multi-angle echo signal.

In an embodiment, the foregoing device may further include an adjustment module 807, where
the obtaining module 401 is further configured to obtain a similarity value of echo data of close angles within the preset neighborhood window;
the integration module 404 is configured to, when the similarity value is greater than a preset threshold, perform non-coherent integration based on the preset neighborhood window, to obtain an integrated target signal; and
the adjustment module 407 is configured to, when the similarity value is less than or equal to the preset threshold, adjust the preset neighborhood window based on the similarity value.

For a specific limitation on the LiDAR echo signal processing device 400, refer to a limitation on S201 to S204 of the LiDAR echo signal processing method above. Details are not described herein again. Each module in the foregoing LiDAR echo signal processing device may be implemented completely or partially through software, hardware, and a combination thereof. The foregoing modules may be embedded in or independent of a processor in the computer device in the form of hardware, or stored in the memory in the computer device in the form of software, to be invoked by the processor to perform operations corresponding to the foregoing modules.

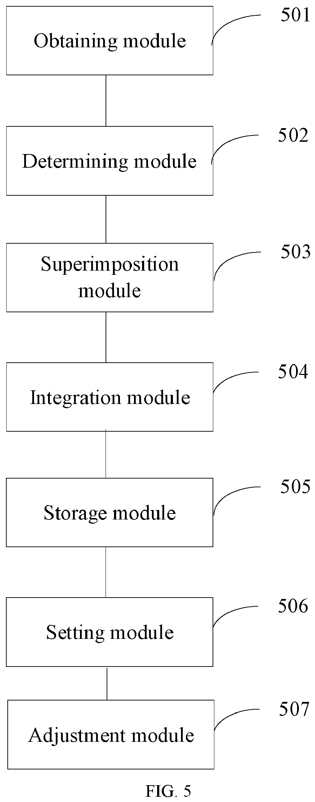

Referring to FIG. 5, FIG. 5 shows a LiDAR echo signal processing device 500 according to an embodiment of this application. The LiDAR echo signal processing device 500 includes an obtaining module 501, a determining module 502, a superimposition module 503, and an integration module 504, where
the obtaining module 501 is configured to obtain an echo signal, where the echo signal includes multidimensional signal emission angles;
the determining module 502 is configured to determine a distance of a detected object based on distance information of the echo signal;
the superimposition module 503 is configured to: when the distance of the detected object is less than or equal to a preset distance value, superimpose a preset number of echo signals at each emission angle, and output a superimposed target signal;
the obtaining module 501 is further configured to: when the distance of the detected object is greater than the preset distance value, obtain a multi-angle echo signal corresponding to a central field of view;
the integration module 504 is configured to perform non-coherent integration on the multi-angle echo signals corresponding to the central field of view based on the preset neighborhood window, to obtain an integrated target signal;
the obtaining module 501 is further configured to obtain multi-angle echo signals corresponding to a peripheral field of view; and
the superimposition module 503 is further configured to superimpose the echo signals at each emission angle corresponding to the peripheral field of view, to output a superimposed target signal corresponding to the peripheral field of view.

In an optional embodiment, the device includes a storage module 505, where the storage module 505 is configured to determine a preset memory corresponding to the echo signal based on the multidimensional signal emission angles and a signal receiving sequence of echo signals; and buffer the echo signal into the corresponding preset memory.

In an optional embodiment, the device may further include a setting module 506, where
the obtaining module 501 is configured to obtain a receiving sequence of multi-angle echo signals; and
the setting module 506 is configured to set the preset neighborhood window based on the receiving sequence of the multi-angle echo signals.

In an optional embodiment, the device may further include an adjustment module 507, where
the obtaining module 501 is further configured to obtain a similarity value of echo data of close angles within the preset neighborhood window;
the integration module 504 is configured to, when the similarity value is greater than a preset threshold, perform non-coherent integration based on the preset neighborhood window, to obtain an integrated target signal; and
the adjustment module 507 is configured to, when the similarity value is less than or equal to the preset threshold, adjust the preset neighborhood window based on the similarity value.

For a specific limitation on the LiDAR echo signal processing device 500, refer to a limitation on S301 to S306 of the LiDAR echo signal processing method above. Details are not described herein again. Each module in the foregoing LiDAR echo signal processing device may be implemented completely or partially through software, hardware, and a combination thereof. The foregoing modules may be embedded in or independent of a processor in the computer device in the form of hardware, or stored in the memory in the computer device in the form of software, to be invoked by the processor to perform operations corresponding to the foregoing modules.

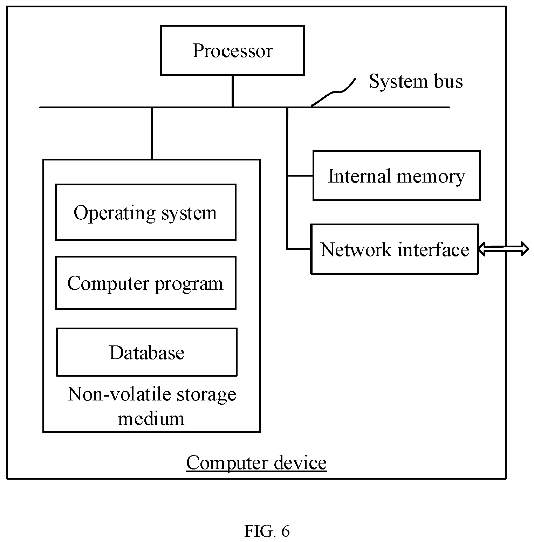

In another embodiment, a computer device is provided. An internal structural diagram of the computer device is shown in FIG. 6. The computer device includes a processor, a memory, a communications interface, and a database connected through a system bus. The processor of the computer device is configured to provide computing and control capabilities. Memories of the computer device include a non-volatile storage medium and an internal memory. The non-volatile storage medium stores an operating system, a computer-readable instructions, and a database. The internal memory provides an environment for running the operating system and the computer-readable instructions in the non-volatile storage medium. The database of the computer device is used to store an echo signal and a target signal. The communications interface of the computer device is configured to connect to and communicate with the LiDAR. When being executed by the processor, the computer-readable instructions are used to implement the foregoing LiDAR echo signal processing method of S201-S204 or S301-S306, which will not be repeated here.

A person skilled in the art can understand that FIG. 6 is only a block diagram of a partial structure related to the solution of this application, and does not constitute a limitation on the computer device to which the solution of this application is applied. The computer device may specifically include more or fewer components than those shown in the figure, or a combination of some components, or a different component arrangement.

One or more non-volatile computer-readable storage media storing computer-readable instructions are provided, and when being executed by one or more processors, the computer-readable instructions enable the one or more processors to perform the steps in the foregoing method embodiments.

A person of ordinary skills in the art can understand that all or some procedures in the method in the foregoing embodiments can be implemented by instructing relevant hardware via the computer-readable instructions. The computer-readable instructions can be stored in a non-volatile computer-readable storage medium. When being executed, the computer-readable instructions can include the procedures in the method embodiments. Any mentioned memory, storage, database, or other media used in the embodiments of this application may include the non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external high-speed buffer memory. For a purpose of description instead of limitation, there may be various forms of RAMs, such as a static RAM (SRAM), a dynamic RAM (DRAM), a synchronous DRAM (SDRAM), a double data rate SDRAM (DDRSDRAM), an enhanced SDRAM (ESDRAM), a Synchlink (Synchlink) DRAM (SLDRAM), a Rambus (Rambus) direct RAM (RDRAM), a direct Rambus dynamic RAM (DRDRAM), and a Rambus dynamic RAM (RDRAM).

Technical features in the foregoing embodiments can be randomly combined. For brevity, all possible combinations of the technical features in the foregoing embodiments are not described. However, so long as the combinations of these technical features are not contradictory, the combinations should be considered as falling within the scope provided by this specification.

The foregoing embodiments only describe several embodiments of this application, and the descriptions are specific and detailed, but should not be construed as a limitation on the scope of the application. It should be noted that a person of ordinary skills in the art may further make changes and improvements without departing from the spirit of this application, and these changes and improvements shall fall within the protection scope of this application. Therefore, the protection scope of this patent application shall be subject to the appended claims.

## Claims

1. A LiDAR echo signal processing method, comprising:
obtaining an echo signal, wherein the echo signal includes multidimensional signal emission angles;
determining a distance of a detected object based on the echo signal; and
when the distance of the detected object is less than or equal to a preset distance value, superimposing a preset number of echo signals at each emission angle, and outputting a superimposed target signal, or
when the distance of the detected object is greater than the preset distance value, performing non-coherent integration on multi-angle echo signals based on a preset neighborhood window, to obtain an integrated target signal.

2. The method according to claim 1, wherein after obtaining the echo signal, the method further includes:
determining a preset memory corresponding to the echo signal based on the multidimensional signal emission angles and a signal receiving sequence of the echo signal; and
buffering the echo signal into the corresponding preset memory.

3. The method according to claim 1, wherein before performing the non-coherent integration on the multi-angle echo signals based on the preset neighborhood window, the method further includes:
obtaining a receiving sequence of multi-angle echo signals; and
setting the preset neighborhood window based on the receiving sequence of the multi-angle echo signals.

4. The method according to claim 1, wherein before performing the non-coherent integration on the multi-angle echo signals based on the preset neighborhood window, the method further includes:
obtaining a similarity value of echo signals at close angles within the preset neighborhood window; and
when the similarity value is greater than a preset threshold, performing non-coherent integration based on the preset neighborhood window, to obtain an integrated target signal, or
when the similarity value is less than or equal to the preset threshold, adjusting the preset neighborhood window based on the similarity value.

5. The method according to claim 3, wherein said performing non-coherent integration on multi-angle echo signals based on the preset neighborhood window when the distance of the detected object is greater than the preset distance value to obtain the integrated target signal includes:
when the distance of the detected object is greater than the preset distance value, obtaining multi-angle echo signals corresponding to a central field of view;
performing non-coherent integration on the multi-angle echo signals corresponding to the central field of view based on the preset neighborhood window, to obtain an integrated target signal corresponding to the central field of view;
obtaining multi-angle echo signals corresponding to a peripheral field of view; and
superimposing the echo signals at each emission angle corresponding to the peripheral field of view, to output a superimposed target signal corresponding to the peripheral field of view.

6. A LiDAR echo signal processing device, comprising:
an obtaining module, configured to obtain an echo signal, wherein the echo signal includes multidimensional signal emission angles;
a determining module, configured to determine a distance of a detected object based on distance information of the echo signal;
a superimposition module, configured to: when the distance of the detected object is less than or equal to a preset distance value, superimpose a preset number of echo signals at each emission angle, and output a superimposed target signal; and
an integration module, configured to, when the distance of the detected object is greater than the preset distance value, perform non-coherent integration on multi-angle echo signals based on a preset neighborhood window, to obtain an integrated target signal.

7. The device according to claim 6, further including a storage module configured to:
determine a preset memory corresponding to the echo signal based on the multidimensional signal emission angles and a signal receiving sequence of the echo signal; and
buffer the echo signal into the corresponding preset memory.

8. The device according to claim 6, further including a setting module, wherein:
the obtaining module is further configured to obtain a receiving sequence of multi-angle echo signals; and
the setting module is configured to set the preset neighborhood window based on the receiving sequence of the multi-angle echo signals.

9. The device according to claim 6, further including an adjustment module, wherein:
the obtaining module is further configured to obtain a similarity value of echo signals at close angles within the preset neighborhood window;
the integration module is further configured to, when the similarity value is greater than a preset threshold, perform non-coherent integration based on the preset neighborhood window, to obtain an integrated target signal; and
the adjustment module is configured to, when the similarity value is less than or equal to the preset threshold, adjust the preset neighborhood window based on the similarity value.

10. The device according to claim 9, wherein:
the obtaining module is further configured to, when the distance of the detected object is greater than the preset distance value, obtain multi-angle echo signals corresponding to a central field of view;
the integration module is further configured to perform non-coherent integration on the multi-angle echo signals corresponding to the central field of view based on the preset neighborhood window, to obtain an integrated target signal;
the obtaining module is further configured to obtain multi-angle echo signals corresponding to a peripheral field of view; and
the superimposition module is further configured to superimpose the echo signals at each emission angle corresponding to the peripheral field of view, to output a superimposed target signal corresponding to the peripheral field of view.
